# FASCICULE DE BREVET EUROPEEN

(11) **EP 3 153 677 B1**
(45) Date de publication et mention de la délivrance du brevet: **09.05.2018**
(21) Numéro de dépôt: 16189139.5
(22) Date de dépôt: 16.09.2016
(51) Int. Cl.: F01N 3/08, F01N 3/10, F01N 3/20, F01N 13/00

(54) **DISPOSITIF DE POST-TRAITEMENT DES GAZ D'ECHAPPEMENT D'UN MOTEUR À COMBUSTION**
VORRICHTUNG ZUR NACHBEHANDLUNG VON ABGASEN EINES VERBRENNUNGSMOTORS
DEVICE FOR AFTER-TREATMENT OF EXHAUST GASES FROM A COMBUSTION ENGINE

(30) Priorité: 08.10.2015 FR 1559569
(43) Date de publication de la demande: 12.04.2017
(73) Titulaire: PSA Automobiles SA, 78300 Poissy (FR)
(72) Inventeur: LE TALLEC, Thomas, 92800 Puteaux (FR)

(56) Documents cités:
- WO-A1-2014/128270
- US-A1- 2011 162 347
- US-A1- 2015 252 706

## Description

L'invention est relative à des moyens de traitement des polluants des gaz d'échappement des moteurs à combustion.

Les émissions polluantes des moteurs à combustion équipant les véhicules automobiles sont réglementées par des normes. Les polluants réglementés sont, selon la technologie de moteur à combustion considérée, le monoxyde de carbone (CO), les hydrocarbures imbrûlés (HC), les oxydes d'azotes (NOx, c'est-à-dire NO et NO₂₎ et les particules, qui sont formés lors de la combustion du carburant dans la chambre de combustion puis émis à l'échappement.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azote ; un filtre à particules peut être employé pour le traitement des particules de suie.

Pour satisfaire aux normes anti-pollution sur les émissions d'oxydes d'azote (NOx), un système spécifique de post-traitement peut être introduit dans la ligne d'échappement des véhicules, notamment des véhicules équipés de moteurs Diesel. Pour le traitement des oxydes d'azote (NOx), on connaît des technologies de réduction catalytique sélective, ou « SCR » pour « Selective Catalytic Réduction » en anglais, qui consistent à réduire les NOx par introduction d'un agent réducteur (ou d'un précurseur d'un tel agent réducteur) dans les gaz d'échappement par réactions catalysées. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

L'agent réducteur généré permet de réduire les oxydes d'azotes par réaction dans un catalyseur SCR, c'est-à-dire un substrat portant une imprégnation catalytique apte à favoriser la réduction des NOx par l'agent réducteur.

On désigne de manière générale ce type de dispositif par le terme de dispositif de « post-traitement » des gaz d'échappement

Les normes européennes, notamment, tendent à devenir de plus en plus sévères. Et les solutions pour réduire les émissions de polluants en sortie de ligne d'échappement pour respecter les normes actuelles se révèleront insuffisantes au vu des évolutions de normes prévues au-delà de 2016.

En effet, la première étape de la norme, Euro 6b (entrée en vigueur en septembre 2014) a conduit les constructeurs automobiles à choisir entre différentes options pour réduire plus spécifiquement l'émission des NOx : - la réduction des NOx « à la source », au niveau du fonctionnement même du moteur, via des technologies de type recyclage des gaz d'échappement dans le moteur, recyclage appelé aussi technologie EGR selon l'acronyme du terme anglais correspondant à « Exhaust Gas Recirculation » haute et basse pression, par exemple ; - la réduction des NOx au niveau de la ligne d'échappement via une technologie de traitement catalytique séquentiel appelée « piège à NOx » ; - la réduction des NOx au niveau de la ligne d'échappement également, via une technologie de traitement continu appelée « réduction catalytique sélective » telle que brièvement décrite plus haut (SCR) ; voire en cumulant plusieurs de ces solutions.

Si ces solutions permettent de satisfaire cette première étape dans l'évolution de la norme (Euro6b), elles ne sont pas forcément capables de satisfaire la seconde étape qui s'annonce encore plus sévère (Euro 6c, entrée en vigueur prévue en septembre 2017), avec des mesures de polluants sur un nouveau cycle de roulage dit « WLTC » (pour « Worldwide Harmonized Light vehicles Test Cycle » en anglais, soit cycle de test harmonisé pour véhicules légers en français), contenant plus de phases transitoires que le cycle d'homologation actuel (dit « MVEG » pour Motor Vehicle Emissions Group en anglais, soit groupe d'émissions pour véhicules motorisés en français), mais aussi des mesures hors cycle (appelé « RDE » pour Real Driving Emission ou émissions en conditions réelles de conduite) devraient être instaurées.

Pour répondre notamment aux risques d'émissions trop élevées de NOx hors cycle, différentes solutions technologiques et architectures peuvent être envisagées. Elles ont leurs avantages et leurs inconvénients. Mais la technologie de traitement des oxydes d'azote la plus efficace est la réduction catalytique sélective (SCR) car elle est efficace dans des plages de température et de débit de gaz plus étendues que celles d'un piège à NOx, l'autre solution de post-traitement.

Par ailleurs, s'ajoutent des contraintes d'implantation du dispositif de post-traitement. En effet, de façon générale, les systèmes de catalyseurs utilisés sont d'autant plus efficaces que la température des gaz d'échappement qui les traversent est élevée (jusqu'à un certain point) et stable. Ils s'amorceront alors d'autant plus vite après le démarrage du moteur quand la température des gaz d'échappement monte progressivement. On a donc intérêt à implanter les dispositifs de post-traitement au plus près du moteur, c'est-à-dire au plus près du collecteur des gaz d'échappement, sous capot, alors même que cet environnement est en général très encombré. Les dispositifs de post-traitement se doivent donc d'être aussi compacts que possible sans nuire à leurs performances.

Dans tout le présent texte, on comprend les termes « amont » et « aval » en fonction de la direction générale d'écoulement des gaz d'échappement dans la ligne d'échappement intégrant les organes de post-traitement, depuis le moteur jusqu'à la canule d'extrémité de la ligne d'échappement.

Il est, par exemple, connu de la demande de brevet WO 2011/089330 un dispositif de post-traitement regroupant dans une même enveloppe plusieurs organes qui vont être successivement traversés par les gaz d'échappement. Il y est proposé, notamment, une série d'organes comprenant d'amont en aval : - un catalyseur d'oxydation, - un injecteur d'agent réducteur de type urée, - un mélangeur dont le rôle est de mélanger intimement les gouttelettes d'urée injectées dans l'enveloppe traversée par les gaz, de façon à se décomposer en ammoniac de manière aussi homogène que possible sur toute la section droite de l'enveloppe, - un organe SCR, - un filtre à particules (appelé FAP par la suite). Il y est également proposé une alternative, consistant à remplacer l'organe SCR et le FAP, par un FAP qui est imprégné d'un catalyseur de réduction des NOx et qui remplit ainsi à la fois la fonction de filtre des suies et de réduction des NOx (appelé SCRF par la suite). D'autres systèmes de traitement des gaz d'échappement SCR sont également connus par les publications de brevet US 2015/252706 A1 et WO 2014/128270 A1.

Cependant, un organe dédié SCR comme décrit dans ce document peut ne pas s'amorcer thermiquement suffisamment tôt pour des raisons de thermique non favorable, notamment dans des conditions de roulage urbain pendant lesquelles les températures dans la ligne d'échappement sont assez basses. Or, c'est justement pendant ce type de roulage urbain que les évolutions de la norme européenne (notamment) vont devenir contraignantes en termes de réduction des émissions de NOx.

Et la variante intégrant le catalyseur SCR dans le filtre à particules (SCRF) n'est pas non plus assez performante en conditions de roulage urbain, du fait de l'inertie thermique importante du substrat spécifique aux filtres à particules, même s'il est positionné de façon très proche du moteur. En effet, le substrat qui assure la filtration des particules et qui est imprégné du revêtement de catalyseur (revêtement d'imprégnation appelé en anglais « washcoat ») est une céramique poreuse qui consomme beaucoup de chaleur pour monter en température. L'amorçage de la phase SCR ne pourra ainsi se faire qu'au bout d'un certain temps, ce qui ne permettra pas à cette solution de respecter les futures évolutions de la norme.

Par ailleurs, les émissions de N₂O ne sont pas encore réglementées, mais pourraient le devenir à l'avenir, dans la mesure où le N₂O est un gaz à effet de serre, et de façon plus marquée que le CO₂. Il est donc pertinent de chercher à les minimiser aussi.

L'invention a alors pour but de concevoir un post-traitement des gaz d'échappement qui remédie aux inconvénients précités. Elle a notamment pour but d'améliorer les dispositifs existants pour permettre de respecter des normes plus sévères en matière d'émissions de polluants, et plus particulièrement concernant les émissions de NOx dans des conditions de roulage non stabilisées du type roulage urbain et/ou dans une plage de températures élargie, tout en limitant par ailleurs les émissions de N₂O. Avantageusement, elle a aussi pour but d'obtenir un dispositif de post-traitement plus performant et qui reste, en outre, compact.

L'invention a pour objet un dispositif de post-traitement des gaz d'échappement d'un moteur à combustion qui comporte, d'amont en aval :
- un organe catalyseur d'oxydation DOC ou un organe piège à NOx LNT ;
- une embouchure d'un moyen d'introduction de réducteur ou de précurseur d'un réducteur pour la réduction catalytique sélective des oxydes d'azote SCR ;
- un organe catalyseur réducteur muni d'un premier revêtement catalytique réducteur sélectif des oxydes d'azote NOx ;
- un organe filtre à particules SCRF muni d'un deuxième revêtement catalyseur de réduction catalytique sélective des oxydes d'azote NOx ;
le premier revêtement catalytique présentant une capacité de stockage d'ammoniac ou de dérivé d'ammoniac moindre que le deuxième revêtement catalytique.

L'invention choisit donc des revêtements catalytiques réducteurs différents pour l'organe SCR dédié et pour le filtre à particules (ci-après également désigné sous l'abréviation SCRF pour plus de concision), en tenant compte de leur aptitude à stocker l'ammoniac. En effet, les éléments catalyseurs actifs de ces revêtements ont pour fonction de réduire les NOx.

On connaît généralement deux grands types de catalyseurs de réduction : - la famille des oxydes (mixtes) métalliques, notamment choisis parmi un au moins des oxydes de cérium, de zirconium, de tungstène ou de manganèse (il peut par exemple s'agir d'un oxyde mixte de cérium et de zirconium ou d'oxyde de zirconium)

- et la famille des zéolithes échangées au cuivre ou au fer (de type ferriérite ou chabazite notamment).

Avec ces deux types de famille de catalyseurs, on a les réactions suivantes de conversion des NOx, c'est-à-dire des NO et NO₂, en azote N₂ par l'ammoniac :

4 NH₃ + 4 NO + O₂ → 4 N₂ + 6 H₂O

2 NH₃ + NO + NO₂ → 2 N₂ + 3 H₂O

4 NH₃ + 2 NO₂ + O₂ → 3 N₂ + 6 H₂O

Mais la famille des zéolithes utilisée comme catalyseur de réduction, contrairement à celle à base d'oxyde métallique, pour prendre un exemple, présente en outre une capacité à stocker l'ammoniac et ses dérivés, ce qui, de fait, provoque en plus les réactions parasitaires, avec formation d'un composé intermédiaire dérivé de l'ammoniac NH₄NO₃. Ce composé intermédiaire se stocke sur la zéolithe puis désorbe pour se décomposer ensuite en formant du N₂O, selon les réactions suivantes :

2 NO₂ + 2 NH₃ → NH₄NO₃ + N₂ + H₂O

NH₄NO₃ → N₂O + 2 H₂O

On constate donc que, selon le type de catalyseur choisi, selon sa capacité à stocker temporairement ou non l'ammoniac ou l'un de ses dérivés comme NH₄NO₃, on peut créer du N₂O dans la ligne d'échappement, même si on s'est efforcé d'en minimiser les émissions par ailleurs, au niveau du moteur lui-même ou du reste de la ligne d'échappement.

En choisissant, pour l'organe SCR, dédié un catalyseur qui ne stocke pas ou peu l'ammoniac ou ses dérivés, on évite ces réactions parasitaires dans cet organe dédié, donc on n'y produit aucun N₂O. En choisissant pour le revêtement catalytique du filtre à particules un catalyseur apte à stocker l'ammoniac et ses dérivés, on obtient une grande efficacité pour traiter les NOx, mais comme tout le NO₂ aura déjà été converti dans l'organe SCR dédié plus en amont de la ligne, il ne pourra plus former avec de l'ammoniac ce composé intermédiaire générateur de N₂O. Le catalyseur du filtre à particules n'aura plus qu'à réduire le NO restant.

Les deux catalyseurs de réduction selon l'invention se répartissent donc les tâches pour réduire les NOx : le premier dans l'organe dédié plutôt pour convertir les NO₂, le deuxième dans le filtre à particules plutôt pour convertir les NO. Les catalyseurs coopèrent en outre pour que le premier ne « laisse » pas passer vers le deuxième des NO₂ susceptibles de générer in situ du N₂O. On obtient donc le niveau d'efficacité requis pour le traitement des NOx tout en limitant/diminuant au mieux les émissions de N₂O.

De préférence, le premier revêtement catalytique ne présente aucune capacité de stockage d'ammoniac ou de dérivé d'ammoniac.

De préférence, selon un premier mode de réalisation, le premier revêtement est à base d'oxyde(s) métallique(s), notamment à base d'oxydes mixtes de métaux et/ou de zircone acide. Ce type de catalyseur présente en effet peu/pas de capacité à stocker l'ammoniac et ses dérivés, il est en outre très performant pour traiter spécifiquement les NO₂.

De préférence, toujours dans ce premier mode de réalisation, le deuxième revêtement est à base de zéolithe(s) échangée(s) au fer et/ou au cuivre, par exemple du type chabazite, ferriérite ou aluminosilicates hydratés (ZMS5). Ce type de catalyseur est très performant également, notamment vis-à-vis des NO. Il est donc complémentaire du premier. En outre, son efficacité vis-à-vis des NOx ne se fait pas au détriment des émissions de N₂O de par la configuration relative du premier et du deuxième revêtement dans la ligne d'échappement proposée par l'invention : le NO₂ traité plus en amont par le premier catalyseur ne risque plus ou quasiment plus de provoquer la génération de N₂O par le deuxième revêtement catalytique. Et le premier revêtement catalytique est choisi pour ne pas créer de N₂O, de par son absence de capacité à stocker l'ammoniac ou ses dérivés.

Selon un autre mode de réalisation, le premier revêtement est de préférence à base de zéolithe(s) au fer.

Toujours selon cet autre mode de réalisation, le deuxième revêtement est de préférence à base de zéolithe(s) au cuivre, notamment une chabazite échangée au cuivre.

On a en effet constaté que les zéolithes au cuivre présentaient une capacité à stocker l'ammoniac et ses dérivés qui est significativement supérieure à celle des zéolithes au fer. En choisissant comme premier revêtement la zéolithe la moins apte à stocker l'ammoniac, on va limiter au mieux la quantité de NO₂ qui passe dans le deuxième revêtement donc limiter les émissions de N₂O.

Selon un autre mode de réalisation, le premier et le deuxième revêtements sont à base d'un mélange d'oxyde(s) métallique(s) et de zéolithe(s) échangée(s) au fer et/ou au cuivre, avec des ratio oxyde(s)/zéolithes(s) différents. Ainsi, le revêtement de l'organe SCR aura de préférence une proportion d'oxyde(s) plus importante que le revêtement du filtre à particules.

Selon une variante, l'organe filtre à particules est muni d'un troisième revêtement catalytique réducteur, dont la capacité de stockage d'ammoniac ou de dérivé d'ammoniac est égal ou supérieure à celle du premier revêtement catalytique et inférieure à celle du deuxième revêtement catalytique réducteur. On vient ainsi augmenter la capacité de conversion des NO₂, en munissant le filtre de deux revêtements catalytiques réducteurs distincts.

Selon cette variante, ce troisième revêtement catalytique peut être disposé dans le filtre dans une zone plus amont que le deuxième revêtement catalytique.

Alternativement, ce troisième revêtement catalytique peut être disposé sur les canaux entrants du filtre à particules.

Dans ces configurations, le troisième revêtement se trouve donc être au contact des gaz d'échappement déjà traités par le premier revêtement et pas encore par le deuxième, il peut donc, si besoin est, achever la conversion des NO₂ qui auraient subsisté dans les gaz d'échappement une fois traités par le premier revêtement. On peut ainsi allonger le parcours de gaz d'échappement au contact d'un catalyseur de réduction des NOx, sans favoriser les émissions de N₂O, ce qui peut être tout particulièrement intéressant quand l'organe SCR dédié est de petites dimensions, pour des raisons de compacité nécessitée par l'environnement d'espace libre restreint, et/ou pour favoriser sa rapide montée en température au démarrage du moteur et faciliter/accélérer ainsi son amorçage, comme détaillé plus loin.

Selon un mode de réalisation, l'organe catalyseur de réduction catalytique sélective des oxydes d'azote est d'une longueur au moins deux fois plus petite, notamment au moins 2,2 à 3 fois plus petite que la longueur du filtre à particules. Ce ratio entre les longueurs des deux organes très spécifique correspondant à un organe SCR bien plus petit que le filtre à particules. Ainsi, on « répartit » la fonction de réduction des NOx sur deux organes successifs, avec un organe SCR dédié qui est petit, et de fait très efficace car s'amorçant thermiquement nettement mieux, à une température seuil inférieure à la température d'amorçage du SCR contenu dans le filtre à particules (SCRF). On peut ainsi considérer que l'organe SCR assure la majorité de la réduction globale des NOx du dispositif, notamment dans des conditions de roulage défavorables (température faible des gaz, débit fort des gaz), et que le SCRF voit sa contribution à la réduction des NOx s'élever une fois ces conditions de roulage défavorables quittées ou une fois les conditions de roulage stabilisées

De préférence, l'organe catalyseur de réduction catalytique sélective des oxydes d'azote présente une longueur d'au plus 80 mm, notamment d'au plus 76 mm, de préférence comprise entre 45 et 55 mm, par exemple d'environ 50 mm. Il s'agit donc de préférence d'un organe SCR vraiment très petit, qu'on peut désigner sous le terme de « tranche » SCR, qui s'est avéré remplir parfaitement son rôle alors qu'on aurait pu craindre qu'une si faible longueur/épaisseur le rendrait finalement peu performant (notamment du fait d'un temps de contact raccourci entre le catalyseur et les gaz d'échappement).

Optionnellement, l'organe catalyseur d'oxydation comprend un matériau adsorbeur d'oxydes d'azote, appelé aussi PNA pour l'expression anglaise « Passive NOx Adsorber ».

De préférence, la longueur du filtre SCRF est d'au moins 10 cm, notamment comprise entre 10 et 15 cm, notamment d'environ 12 cm.

De préférence, la longueur totale de l'organe catalyseur de réduction catalytique sélective des oxydes d'azote et du filtre à particules, y compris l'espace éventuel entre eux, est d'au plus 200 mm, notamment d'au plus 190 mm, de préférence compris entre 170 et 180 mm L'invention maintient donc un encombrement modéré par rapport à une solution utilisant seulement un organe SCRF : elle ne vient pas rallonger notablement le dispositif de post-traitement, et préserve donc la compacité de l'ensemble.

De préférence, la longueur totale entre l'entrée de l'organe catalyseur d'oxydation et la sortie du filtre à particules est d'au plus 450 mm, notamment d'au plus 400 mm, de préférence comprise entre 280 et 380 mm.

Selon un mode de réalisation, le support de l'organe catalyseur d'oxydation et/ou celui de l'organe catalyseur de réduction catalytique sélective est métallique, et optionnellement équipé(s) de moyens chauffants, par exemple de type résistances électriques. On réduit ainsi leurs durées de montée en température, et donc le temps à partir duquel ils s'amorcent.

Alternativement, on peut utiliser pour l'un et/ou l'autre de ces organes un matériau de type céramique comme la cordiérite.

Le support du filtre à particules SCRF peut être, par exemple, en carbure de silicium (SiC), en cordiérite ou en titanate d'aluminium.

Avantageusement, le dispositif de post-traitement selon l'invention comprend également un organe mélangeur des gaz d'échappement et du réducteur et/ou du précurseur du réducteur entre l'embouchure du moyen d'introduction de réducteur et/ou de précurseur d'un réducteur pour la réduction catalytique sélective des oxydes d'azote SCR et l'organe catalyseur de réduction catalytique sélective des oxydes d'azote.

Ce mélangeur a pour fonction de mélanger aussi bien que possible les gaz d'échappement avec le réducteur ou le précurseur de réducteur, cela étant notamment très utile quand le précurseur est de type liquide, comme de l'urée en phase aqueuse.

L'invention s'applique également à l'injection directe du gaz réducteur, comme de l'ammoniac, qui vient alimenter la ligne d'échappement à partir d'une ou plusieurs cartouches de sel (notamment de type SrCl₂) apte à adsorber l'ammoniac et à le relarguer par activation thermique, de façon connue (technologie appelée communément SCR « solide »), et, dans ce cas-là, le mélangeur est moins nécessaire.

Le dispositif de l'invention peut également comprendre, en aval du filtre à particules, un organe de traitement des fuites d'ammoniac (« NH₃ slip « en anglais), pour éviter/minimiser tout rejet malodorant d'ammoniac formé ou injecté en excès en bout de ligne d'échappement.

L'invention a également pour objet la ligne d'échappement d'un moteur à combustion intégrant le dispositif de post-traitement précédemment décrit.

L'invention porte également sur un véhicule doté d'un compartiment moteur, tel que le moteur et le dispositif de post-traitement équipant sa ligne d'échappement sont contenus dans ledit compartiment moteur.

L'invention est décrite plus en détail ci-après en référence aux figures relatives à un mode de réalisation non limitatif se rapportant à un dispositif de post-traitement des gaz d'échappement d'un moteur, par exemple de type diesel :
- la figure 1 représente schématiquement un moteur et sa ligne d'échappement d'un véhicule automobile comportant le dispositif de post-traitement selon un exemple de l'invention ;
- les figures 2a et 2b représentent les organes de traitement SCR du dispositif de post-traitement de la figure 1, selon deux variantes.

Les références reprises d'une figure à l'autre désignent des mêmes composants, et les différents composants représentés ne sont pas nécessairement à l'échelle et restent très schématiques.

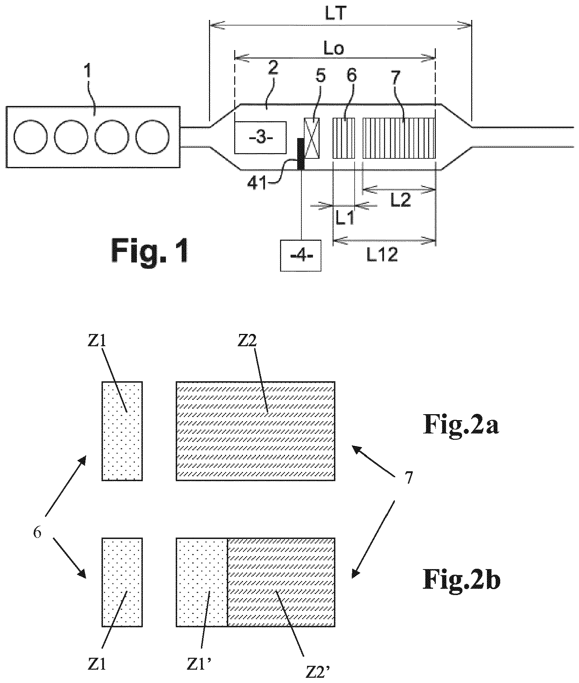

Dans l'invention, et tel que représenté sur la figure 1, on propose un dispositif de traitement des gaz d'échappement d'un moteur 1. Ce dispositif est intégré à la ligne d'échappement raccordée au collecteur (non représenté) des gaz d'échappement du moteur 1. Il comporte, dans une même enveloppe 2 (que l'on peut également désigner par le terme anglophone de « canning ») et, selon le sens d'écoulement des gaz d'échappement (d'amont en aval donc) un organe catalyseur d'oxydation 3, une embouchure 41 d'un moyen d'introduction 4 de réducteur (ou d'un précurseur d'agent réducteur), un mélangeur 5, un organe catalyseur SCR 6 (catalyseur de réduction catalytique sélective des oxydes d'azote), et un filtre à particules SCRF muni d'un revêtement d'imprégnation SCR 7. L'enveloppe 2 est située au plus près du collecteur des gaz d'échappement, notamment à environ 35 cm de sa sortie (par exemple d'au plus 50 cm de sa sortie). Elle est disposée, dans le véhicule automobile, dans l'espace sous-capot accueillant le moteur 1.

Les données dimensionnelles/géométriques sont les suivantes : L'enveloppe 2 est cylindrique et permet de loger les différents organes 3, 6 et 7, également de formes extérieures sensiblement cylindriques et de sections d'environ 0,016 m² de surface frontale. Les extrémités de l'enveloppe 2 sont en forme de tronçons de cône, afin d'en permettre le raccordement au reste de la ligne d'échappement de section nettement plus petite. La longueur L1 de l'organe SCR 6 est entre 5 et 7,5 cm, par exemple de 6 cm. La longueur L2 du filtre à particules 7 est compris entre 4 et 6 pouces, soit entre 10,16 et 15,24 cm, par exemple ici de 5 pouces, soit 12,7 cm.

La longueur L12 mesurée depuis la face amont de l'organe SCR 6 jusqu'à la face aval du filtre à particules 7 est, sachant qu'ils sont séparés d'environ 8 mm.

La longueur L3 de l'organe catalyseur d'oxydation est d'environ 70 mm.

La longueur L0 depuis la face amont du catalyseur d'oxydation 3 jusqu'à la face aval du filtre à particules 7 est entre 28 et 38 cm. Cette longueur correspond substantiellement à la longueur de la portion cylindrique de l'enveloppe 2. La longueur totale LT de l'enveloppe 2, incluant les deux cônes de raccordement est donc un peu supérieure.

La première « brique » de ce dispositif de post-traitement est le catalyseur d'oxydation 3, qui oxyde les espèces réductrices que sont le monoxyde de carbone (CO) et les hydrocarbures imbrûlés (HC). Les réactions qu'il favorise sont les suivantes :

CO + ½ O₂ → CO₂ Réaction d'oxydation du monoxyde de carbone

CₓH_{y} + (x+y/4) O₂ → x CO₂ + (y/2) H₂O Réaction d'oxydation des hydrocarbures imbrûlés

Il est constitué d'un support en nid d'abeille de type cordiérite sur lequel est déposée une phase active catalytique (« washcoat »). Cette phase comporte des oxydes tels que l'alumine dopée par différents stabilisants (lanthane, cérium, zirconium, titane, silicium, etc...). Sur ces oxydes, des métaux précieux (platine, palladium) sont déposés afin de catalyser les réactions d'oxydation à basse température. Des composés acides tels que des zéolithes sont aussi ajoutés. Leur aptitude au stockage des hydrocarbures à basse température et leur déstockage à haute température permet d'améliorer le traitement des HC lors des phases froides. On peut ajouter à ces fonctions (oxydation du monoxyde de carbone et des hydrocarbures imbrûlés et stockage de ces derniers à basse température) une fonction de stockage des oxydes d'azote, NOx également à basse température. Cette fonction de stockage est assurée par l'introduction de matériaux de type oxydes simples ou mixtes à caractère basique tels que par exemple, les oxydes de cérium ou de baryum entre autres.

On ne décrit pas en détails ici l'injecteur 4 d'urée, ni le mélangeur 5 (appelé aussi boîte de mélange), déjà décrits et connus, notamment de la demande de brevet WO 2011/089330 précitée. On rappelle juste que la boîte de mélange 5 alimentée par un injecteur 4, lui-même alimenté par un module jauge-pompe qui puise de l'urée en solution aqueuse dans un réservoir d'environ 20 litres (il peut en contenir moins car le volume d'urée embarquée dépend de la stratégie de consommation adoptée), assure un mélange entre les gouttes d'urée et les gaz d'échappement suffisant pour que la réaction de thermolyse se fasse totalement et que la réaction d'hydrolyse se fasse en partie avant d'être « terminée » sur l'organe SCR 6.

L'organe SCR 6 et le filtre à particules SCRF 7 traitent les oxydes d'azote NOx. Le support poreux de l'organe SCR 6 est en cordiérite, tandis que le support poreux du filtre 7 est plutôt en carbure de silicium SiC.

En aval de l'enveloppe 2, on prévoit de préférence un organe de traitement des fuites d'ammoniac (non représenté). Il comprend un catalyseur de traitement des fuites d'ammoniac par oxydation de l'ammoniac en NOx puis la réduction desdits NOx en azote, que l'on pourra dans la suite du présent texte désigner sous le terme ASC. « ASC » est l'acronyme anglais du terme « Ammonia Slip Catalyst » ou catalyseur des fuites en ammoniac en français.

Alternativement, l'organe de traitement des fuites d'ammoniac peut être un catalyseur de nettoyage des fuites d'ammoniac par oxydation de l'ammoniac, que l'on pourra dans la suite du présent texte désigner sous le terme CUC. « CUC » est l'acronyme anglais du terme « Clean-Up Catalyst » ou catalyseur de nettoyage pour le traitement des fuites en ammoniac. Ce type de catalyseur oxyde seulement l'ammoniac en le transformant en NOx.

Selon un premier exemple, tel que représenté à la figure 2a, le catalyseur de l'organe SCR 6 est à base d'oxydes métalliques mixtes de type oxydes de cérium et de zirconium ou de zircone acide, il est déposé sous forme d'un revêtement catalytique sur l'ensemble des parois des canaux définis par l'organe 6 dans les zones Z1 aux figures. Le catalyseur du filtre à particules 7 est entièrement imprégné par une composition catalytique dans une zone Z2, dont le catalyseur est en zéolithe échangée au fer ou au cuivre, comme une zéolithe β, fer--ferriérite, du ZSM5, ou une zéolithe au cuivre. On préfère ici une zéolithe au cuivre du type ferriérite ou chabazite.

En variante de cet exemple, on peut prévoir pour le catalyseur de l'organe SCR dédié 6 une zéolithe échangée au fer (du type feriérite ou chabazite) et pour le catalyseur du filtre 7 une zéolithe de même type mais échangée au cuivre.

De préférence, le catalyseur dédié comprend une ferriérite au fer, et le catalyseur du filtre comprend une chabazite au cuivre.

Selon un deuxième exemple représenté à la figure 2b, la seule modification consiste à décomposer le filtre 7 en deux zones, une zone Z'1 amont et une zone Z'2 aval : la zone Z1' est imprégnée avec la même composition catalytique que l'organe SCR 6, la zone Z2' est imprégnée avec la même composition catalytique que la zone Z2 de la figure 2a.

Que ce soit avec le premier ou le deuxième exemple, le choix des deux types de catalyseur de réduction s'est fait en choisissant de placer : - le plus en amont le catalyseur le moins susceptible de stocker de l'ammoniac ou ses dérivés et/ou le plus susceptible de convertir les NO₂ , - le plus en aval celui le plus susceptible de traiter les NO (et apte à stocker l'ammoniac et ses dérivés). Ainsi, on obtient une double complémentarité : deux organes se répartissent la conversion des NOX, mais également, plus finement, le traitement des NO₂ versus celui des NO, tout en minimisant les émissions de N₂O. Avec l'invention, on ne s'interdit donc pas d'utiliser des catalyseurs de réduction du type des zéolithes échangées au Cu ou Fe, qui sont très efficaces, mais on crée les conditions pour qu'elles ne viennent pas générer, par ailleurs, du N₂O.

En autre variante de l'invention, on peut aussi prévoir de choisir la même composition catalytique pour l'organe SCR 6 et pour le filtre 7 (oxyde métallique ou zéolithe notamment), mais avec une concentration en catalyseur actif plus élevée dans le filtre 7 que dans l'organe SCR 6.

En autre variante de l'invention, on peut prévoir d'utiliser comme catalyseur un mélange d'oxyde(s) de cérium et de zirconium et d'une zéolithe, mais dans un ratio différent selon que la composition est pour l'organe SCR dédié ou pour le filtre SCRF : on utilise alors pour l'organe SCR dédié une proportion plus forte en oxyde(s) métallique(s) que pour le filtre SCRF.

## Revendications

1. Dispositif de post-traitement des gaz d'échappement d'un moteur à combustion (1) le dispositif comportant d'amont en aval :
• un organe catalyseur d'oxydation DOC ou un organe piège à NOx LNT (3) ;
• une embouchure (41) d'un moyen d'introduction (4) de réducteur ou de précurseur d'un réducteur pour la réduction catalytique sélective des oxydes d'azote SCR ;
• un organe catalyseur réducteur (6) muni d'un premier revêtement catalytique réducteur sélectif des oxydes d'azote NOₓ ;
• un organe filtre à particules SCRF (7) muni d'un deuxième revêtement catalyseur de réduction catalytique sélective des oxydes d'azote NOₓ; le premier revêtement catalytique présentant une capacité de stockage d'ammoniac ou de dérivé d'ammoniac moindre que le deuxième revêtement catalytique, **caractérisé en ce que** les revêtements catalytiques réducteurs sont différents, le premier revêtement étant à base de zéolithe(s) au fer, le deuxième revêtement étant à base de zéolithe(s) au cuivre.

2. Dispositif selon la revendication 1, **caractérisé en ce que** le premier revêtement est à base d'une ferriérite au fer.

3. Dispositif selon la revendication précédente, **caractérisé en ce que** le deuxième revêtement est à base d'une chabazite au cuivre.

4. Dispositif selon l'une des revendications précédentes, **caractérisé en ce que** l'organe filtre à particules est muni d'un troisième revêtement catalytique réducteur, dont la capacité de stockage d'ammoniac ou de dérivé d'ammoniac est égal ou supérieure à celle du premier revêtement catalytique et inférieure à celle du deuxième revêtement catalytique réducteur.

5. Dispositif selon la revendication précédente, **caractérisé en ce que** le troisième revêtement catalytique est disposé dans le filtre (7) dans une zone (Z1') plus amont que le deuxième revêtement catalytique (Z2').

6. Dispositif selon la revendication 4, **caractérisé en ce que** le troisième revêtement catalytique est disposé sur les canaux entrants du filtre à particules.

7. Ligne d'échappement d'un moteur thermique comprenant le dispositif selon l'une des revendications précédentes.

## Patentansprüche

1. Vorrichtung zur Nachbehandlung von Abgasen eines Verbrennungsmotors (1), wobei die Vorrichtung von stromaufwärts nach stromabwärts Folgendes umfasst:
• ein Oxidationskatalysatorelement DOC oder ein NOx-Fallenelement LNT (3);
• eine Mündung (41) eines Mittels (4) zum Einführen von Reduktionsmittel oder eines Vorläufers eines Reduktionsmittels für die selektive katalytische Reduktion SCR der Stickstoffoxide;
• ein Reduktionskatalysatorelement (6), das mit einer ersten katalytischen Beschichtung zur selektiven katalytischen Reduktion der Stickstoffoxide NOₓ versehen ist;
• ein Partikelfilterelement SCRF (7), das mit einer zweiten katalytischen Beschichtung zur selektiven katalytischen Reduktion der Stickstoffoxide NOₓ versehen ist; wobei die erste katalytische Beschichtung eine Lagerkapazität von Ammoniak oder Ammoniakderivat aufweist, die geringer ist als die zweite katalytische Beschichtung, **dadurch gekennzeichnet, dass** die katalytischen Reduktionsbeschichtungen unterschiedlich sind, wobei die erste Beschichtung auf der Basis von Eisenzeolith(en) ist, die zweite Beschichtung auf der Basis von Kupferzeolith(en) ist.

2. Vorrichtung nach Anspruch 1, **dadurch gekennzeichnet, dass** die erste Beschichtung auf der Basis eines Eisen-Ferrierits ist.

3. Vorrichtung nach dem vorhergehenden Anspruch, **dadurch gekennzeichnet, dass** die zweite Beschichtung auf der Basis eines Kupferchabazits ist.

4. Vorrichtung nach einem der vorhergehenden Ansprüche, **dadurch gekennzeichnet, dass** das Partikelfilterelement mit einer dritten katalytischen Reduktionsbeschichtung versehen ist, deren Lagerkapazität von Ammoniak oder Ammoniakderivat gleich oder größer ist als die der ersten katalytischen Beschichtung, und kleiner als die der zweiten katalytischen Reduktionsbeschichtung.

5. Vorrichtung nach dem vorhergehenden Anspruch, **dadurch gekennzeichnet, dass** die dritte katalytische Beschichtung in dem Filter (7) in einer Zone (Z1') weiter stromaufwärts als die zweite katalytische Beschichtung (Z2') angeordnet ist.

6. Vorrichtung nach Anspruch 4, **dadurch gekennzeichnet, dass** die dritte katalytische Beschichtung auf den Eingangskanälen des Partikelfilters angeordnet ist.

7. Abgasstrang eines Verbrennungsmotors, der die Vorrichtung nach einem der vorhergehenden Ansprüche umfasst.

## Claims

1. A device for after-treatment of exhaust gases from a combustion engine (1), the device comprising from upstream to downstream:
• an oxidation catalyst element DOC or an NOx trap element LNT (3);
• an orifice (41) of an introduction means (4) of reducing agent or reducing agent precursor for the selective catalytic reduction of nitrogen oxides SCR;
• a catalytic reduction element (6) provided with a first catalytic coating for selective reduction of nitrogen oxides NOₓ;
• a particle filter element SCRF (7) provided with a second catalytic coating for selective catalytic reduction of nitrogen oxides NOx; the first catalytic coating having a storage capacity of ammonia or of ammonia derivative less than the second catalytic coating, **characterized in that** the catalytic reduction coatings are different, the first coating being based on iron zeolite(s), the second being based on copper zeolite(s).

2. The device according to claim 1, **characterized in that** the first coating is based on an iron ferrierite.

3. The device according to the preceding claim, **characterized in that** the second coating is based on a copper chabazite.

4. The device according to one of the preceding claims, **characterized in that** the particle filter element is provided with a third catalytic reduction coating, of which the storage capacity of ammonia or of ammonia derivative is equal to or greater than that of the first catalytic coating and less than that of the second catalytic reduction coating.

5. The device according to the preceding claim, **characterized in that** the third catalytic coating is disposed in the filter (7) in a zone (Z1') more upstream than the second catalytic coating (Z2').

6. The device according to claim 4, **characterized in that** the third catalytic coating is disposed on the incoming channels of the particle filter.

7. An exhaust line of a heat engine including the device according to one of the preceding claims.
